# FASCICULE DE BREVET EUROPEEN

(11) **EP 3 163 344 B1**
(45) Date de publication et mention de la délivrance du brevet: **29.05.2024**
(21) Numéro de dépôt: 16187558.8
(22) Date de dépôt: 07.09.2016
(51) Int. Cl.: G02B 6/44

(54) **DISPOSITIF DE PROTECTION MÉCANIQUE DE FIBRES OPTIQUES DANS UNE CASSETTE D'UN BOÎTIER DE DISTRIBUTION DE FIBRES OPTIQUES**
MECHANISCHE SCHUTZVORRICHTUNG FÜR OPTISCHE FASERN IN EINER KASSETTE EINES VERTEILERKASTENS FÜR OPTISCHE FASERN
DEVICE FOR THE MECHANICAL PROTECTION OF OPTICAL FIBRES IN A CASSETTE OF AN OPTICAL FIBRE DISTRIBUTION UNIT

(30) Priorité: 15.09.2015 FR 1558597
(43) Date de publication de la demande: 03.05.2017
(73) Titulaire: Nexans, 92400 Courbevoie (FR)
(72) Inventeur: MIART, Freddy, 08000 Charleville-Mézières (FR); JEAN, Jérémy, 08350 Bosseval-et-Briancourt (FR)
(74) Mandataire: Ipsilon

(56) Documents cités:
- EP-A1- 2 533 086
- WO-A2-2013/007662

## Description

L'invention concerne une cassette d'un boîtier de distribution de fibres optiques comprenant un élément de protection mécanique de fibres optiques dans les zones de croisement de fibres optiques et d'un tube en passage.

Les fibres optiques sont des fibres de très petit diamètre de l'ordre de 250 µm ou 900 µm qui permettent la transmission de données. Le réseau de distribution permet d'amener la fibre optique dans des lieux d'habitation ou des locaux professionnels à partir d'un réseau central. La fiabilité du réseau dépend du bon fonctionnement des fibres optiques qui doivent donc être protégées sur l'ensemble du réseau.

Les fibres optiques sont organisées dans des câbles qui ont pour but de les protéger et de les rendre manipulables sur l'ensemble du réseau. Les fibres optiques peuvent être organisées de différentes manières au sein des câbles, et, notamment, être placées dans un tube, un tube contenant une ou plusieurs fibres optiques, un câble pouvant contenir un ou plusieurs tube(s).

Par ailleurs, une fibre optique comporte une fibre plastique ou de verre revêtue d'une gaine externe de protection. Dans ce qui suit, elle sera appelée « fibre optique» et un tel tube contenant une ou plusieurs fibres optiques gainées sera appelé « tube ».

Les boîtiers de distribution de fibres optiques ou boîtiers de brassage optique ont pour but de relier, par des connecteurs, les fibres optiques provenant du réseau central aux fibres optiques allant vers les utilisateurs. Les fibres optiques contenues dans des tubes sont amenées au niveau du boîtier de distribution par un câble. Les tubes comprenant les fibres optiques sont extraits du câble en amont du boîtier de distribution. Les fibres optiques à connecter sont extraites de l'un des tubes et connectées au boîtier de distribution, les autres tubes étant des tubes en passage qui vont passer dans le boîtier. Au sein du boîtier de distribution, une cassette de base permet de stocker les surlongueurs des tubes en passage et également d'orienter les fibres optiques provenant des connecteurs vers les cassettes d'épissurage contenues dans le boîtier.

WO 2013/007662 décrit un appareil de télécommunications comprenant un boîtier ayant une base de boîtier et un couvercle de boîtier qui se rejoignent au niveau d'une interface scellée. Un séparateur peut être prévu sur un insert de gestion. L'insert de gestion peut également comprendre une plaque à rainures verrouillée sur une plaque de base. Un ou plusieurs ensembles de ports permettent aux câbles d'entrer et/ou de sortir du boîtier par des ports de câbles scellés. Les ensembles de ports peuvent fournir des ancrages pour des éléments de renforcement de câble et/ou des organiseurs pour des tubes de fibres.

EP 2533086 décrit un système de gestion de fibres. Le système de gestion de fibres comprend une plaque de montage de plateau ayant un côté avant et un côté arrière. Le système de gestion de fibres comprend également un premier plateau de gestion de fibres connecté au côté avant de la plaque de montage de plateau.

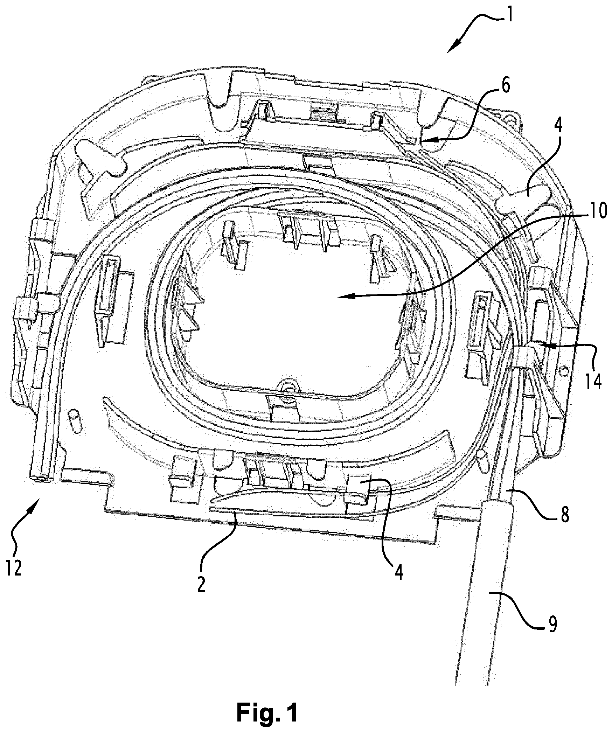

La figure 1 montre la disposition des fibres optiques et des tubes dans une cassette de base d'un boîtier de distribution connue. Les fibres optiques 2 entrent dans la cassette de base à partir des connecteurs non représentés, passent par des éléments de guidage, puis sont orientées à partir d'une sortie 6 vers les cassettes d'épissurage non représentées. Les tubes en passage 8 provenant du câble principal 9 entrent dans la cassette et sont stockés dans une zone de lovage 10 puis sortent par une sortie 12. Les tubes en passage 8 passent au-dessus des fibres optiques 2 dans une zone de croisement 14.

Dans cette zone de croisement, les fibres optiques souples et fragiles peuvent donc être endommagées par le contact avec les tubes en passage plus rigides, ce qui peut entrainer une baisse de la qualité du signal.

La présente invention exposée dans le jeu de revendications joint vise à remédier à cet inconvénient.

L'élément de protection mécanique de l'invention est un système simple qui évite de réaliser de multiples surmoulages et reliefs au niveau du plateau de la cassette de base.

La cassette de base de l'invention accueille une ou plusieurs fibre(s) optique(s) et un ou plusieurs tube(s) en passage. Dans ce cas, un seul élément de protection peut être placé dans une zone de croisement entre plusieurs fibres optiques et plusieurs tubes en passage. La cassette de l'invention permet ainsi d'éviter la présence de multiples éléments de guidage pour chacun des tubes ou chacune des fibres optiques.

Dans le cas où plusieurs zones de croisement entre la fibre optique et le tube en passage sont présentes dans la cassette, un élément de protection peut être placé au niveau de chacune de ces zones.

L'élément de protection est une pièce creuse, par exemple disposée sur le plateau de la cassette, son espace interne étant apte à recevoir au moins une fibre optique, le(s) tube(s) étant destiné(s) à prendre appui sur ladite pièce creuse. Selon ce mode de réalisation, l'espace interne de la pièce creuse est orienté vers le plateau de la cassette. Ainsi, l'espace interne est délimité, d'une part, par une surface interne de la pièce creuse et, d'autre part, par le plateau.

La fibre optique passant à l'intérieur de l'élément de protection est ainsi protégée du tube qui passe à l'extérieur de l'élément de protection.

Selon l'invention, l'espace interne de l'élément de protection est apte à recevoir uniquement des fibres optiques et pas d'autres éléments du câble. En particulier, les tubes comprenant les fibres optiques ne passent pas à l'intérieur de l'espace interne formé par l'élément de protection.

Selon une caractéristique possible, l'élément de protection est une pièce allongée dans le sens de la trajectoire de la fibre optique.

L'élément de protection est adapté à la trajectoire de la fibre optique au sein de la cassette, ainsi, il n'est pas nécessaire de dévier la fibre optique de sa trajectoire pour que la fibre optique passe dans l'espace interne de l'élément de protection.

Selon une autre caractéristique possible, l'élément de protection est en relief par rapport au plateau de la cassette de base.

La fibre optique passe dans la cassette de base en étant en appui sur le plateau. L'élément de protection étant en relief, la fibre optique peut passer dans l'espace interne de l'élément de protection sans dévier de sa trajectoire.

Selon une caractéristique de l'invention, l'élément de protection est un tunnel.

Ce tunnel a une forme allongée selon l'axe de la trajectoire de la fibre optique. Le tube en passage passe sur le tunnel en prenant appui sur la face supérieure et en croisant l'axe longitudinal du tunnel.

En coupe transversale, l'élément de protection a, de préférence, une section transversale en forme d'arc de cercle, mais il peut également avoir une section d'une autre forme comme, par exemple, un rectangle.

Selon une caractéristique préférée de l'invention, l'élément de protection est courbé longitudinalement selon la trajectoire de la fibre optique.

L'élément de protection en forme de courbe longitudinalement selon la trajectoire de la fibre optique permet d'éviter toute cassure le long de la fibre optique. En effet, la fibre optique suit sa trajectoire et l'élément de protection en forme de courbe s'adapte à cette trajectoire. Il n'est donc pas nécessaire que la fibre optique soit déviée pour qu'elle passe au sein de l'élément de protection.

Selon une autre caractéristique de l'invention, l'élément de protection comprend une fente longitudinale apte à laisser passer au moins une fibre optique.

L'élément de protection étant une pièce creuse, la fente longitudinale permet de faciliter l'insertion de la fibre optique dans l'espace interne de cette pièce.

Selon une caractéristique préférée de l'invention, la fente présente sur l'élément de protection est courbée dans le sens opposé à la courbure de la trajectoire de la fibre optique, afin d'éviter que cette dernière ne sorte spontanément de l'élément de protection.

Selon une autre caractéristique de l'invention, l'élément de protection est moulé avec le plateau de la cassette de base, et la cassette de base et l'élément de protection forment ainsi une seule pièce. L'élément de protection peut également être une pièce rapportée et être fixé au plateau de la cassette de base, par exemple, par collage, soudage, vissage ou par tout autre moyen. L'élément de protection est en général réalisé dans le même matériau que la cassette de base, de préférence en matière plastique.

Selon une autre caractéristique possible, l'élément de protection a une longueur comprise entre 50 mm et 55 mm. La longueur est définie comme la distance la plus longue selon l'axe longitudinal de l'élément de protection, c'est-à-dire selon l'axe de la trajectoire de la fibre optique traversant l'élément de protection.

Selon une caractéristique possible, l'élément de protection a une largeur comprise entre 7 mm et 8 mm, de préférence d'environ 7,5 mm. La largeur est définie comme la distance entre les deux parois latérales intérieures de l'élément de protection.

L'invention concerne également un boîtier comprenant au moins une cassette de base possédant au moins un élément de protection selon l'invention, au moins une fibre optique et au moins un tube en passage, ledit tube en passage comprenant au moins une fibre optique.

L'invention sera mieux comprise, et d'autres buts, détails, caractéristiques et avantages de celles-ci apparaîtront plus clairement au cours de la description suivante d'un mode de réalisation préféré de l'invention, donnée uniquement à titre illustratif et non limitatif, en référence aux dessins annexés :
- La figure 1 est une vue de dessus d'une cassette de base de l'art antérieur déjà décrite ;
- La figure 2 est une vue en perspective d'un boîtier aérien de distribution de fibres optiques conforme à l'invention ;
- La figure 3 est une vue en perspective d'un boîtier aérien de distribution de fibres optiques conforme à l'invention ouvert ;
- La figure 4 est une vue de dessus d'une cassette de base selon l'invention ;
- La figure 5 est une vue en perspective de détail, conformément à l'invention.

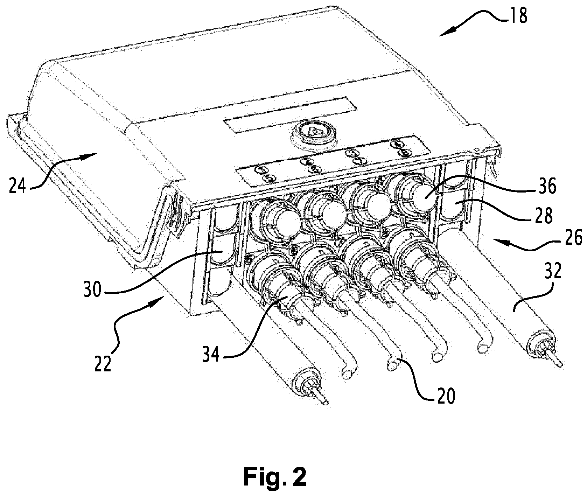

La figure 2 représente un boîtier aérien 18 de distribution de fibres optiques 20 comprenant une base 22 sur laquelle est fixé un couvercle de fermeture 24. Une face de connexion 26 comprend plusieurs entrées 28 et plusieurs sorties 30 pour un tube en passage 32 dont les surlongueurs sont stockées à l'intérieur du boîtier aérien 18. La face de connexion 26 comprend également plusieurs connecteurs 34 de fibres optiques permettant de connecter les fibres optiques 20 ainsi que des bouchons 36 permettant de protéger les connecteurs auxquels aucune fibre optique n'est raccordée.

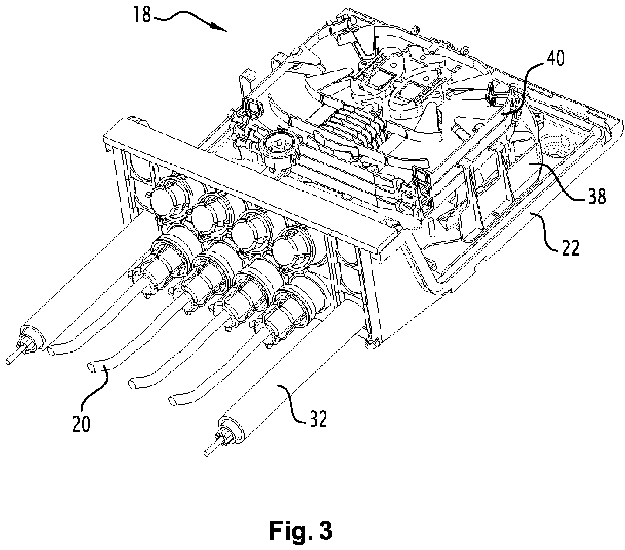

Le boîtier aérien 18 dépourvu de son couvercle de fermeture 24 est représenté à la figure 3. Il comporte, à partir de la base 22 une cassette de base 38 puis plusieurs cassettes d'épissurage 40. La cassette de base 22 permet le stockage des surlongueurs du tube en passage 32 ainsi que l'orientation des fibres optiques 20 vers les cassettes d'épissurage 40 dans lesquelles les fibres optiques 20 sont insérées.

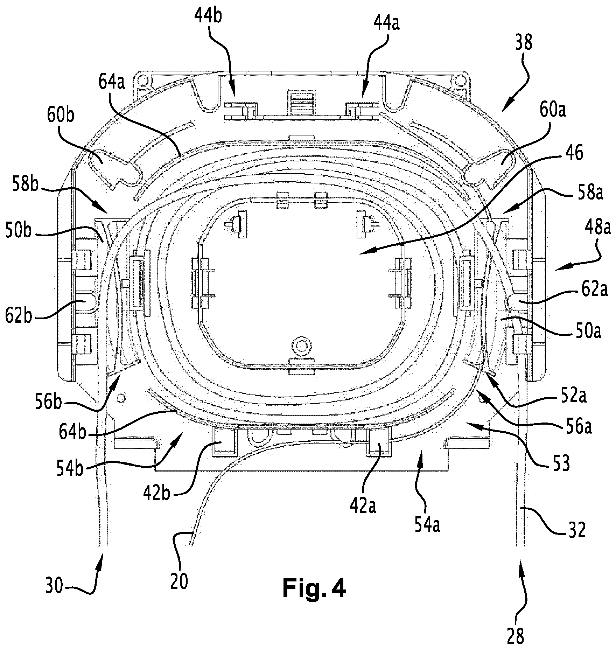

Cette cassette 38 de stockage de tube en passage et d'orientation de fibres optiques appelée cassette de base est représentée à la figure 4.

La cassette de base comprend un plateau 53. Les fibres optiques 20 sont insérées dans la cassette de base 38 à partir des connecteurs 34 de fibres optiques (non représentés sur cette figure) et passent par des éléments de guidage 42a. Elles sont ensuite dirigées vers les cassettes d'épissurage 40 par une sortie 44a. Le tube en passage 32 destiné à être stocké dans la cassette de base 38 est inséré par une entrée 28. Les surlongueurs sont stockées dans une zone de lovage 46 puis le tube en passage est orienté vers une sortie 30.

Sur son chemin de l'entrée 28 de la cassette de base 38 vers la zone de lovage 46, le tube en passage 32 croise les fibres optiques 20 dans la zone 48a.

La cassette de base conforme à l'invention possède au moins un élément de protection mécanique 50a apte à empêcher le contact direct entre les fibres optiques 20 et les tubes en passage 32 dans la zone de croisement 48a. Cet élément de protection mécanique est placé entre les fibres optiques 20 et les tubes en passage 32.

Plus précisément, la cassette de base possède ici deux éléments de protection 50a et 50b. L'élément de protection mécanique 50a est une pièce creuse pouvant recevoir au moins une fibre optique 20 dans son espace interne 52a et le tube en passage 32 passe au-dessus de cette pièce creuse en prenant appui sur la paroi externe de la pièce creuse. L'espace interne est délimité, d'une part, par la paroi interne de l'élément de protection et, d'autre part, par le plateau 53 de la cassette 38. L'élément de protection permet ainsi de protéger la ou le(s) fibre(s) optique(s) 20 passant à l'intérieur de cet élément de protection, du ou des tube(s) en passage 32 passant sur cet élément de protection.

L'élément de protection 50a est une pièce allongée selon la trajectoire de la fibre optique 20. Ainsi, l'élément de protection peut également servir de pièce de guidage de la fibre optique 20.

L'élément de protection 50a est en relief par rapport au plateau 53 de la cassette 38. La fibre optique 20 peut ainsi suivre sa trajectoire avec pour support le plateau 53 et passer à l'intérieur de l'élément de protection 50a sans être déviée.

La fibre optique 20 est insérée dans la cassette 38 à partir des connecteurs de fibres optiques (non représentés sur la figure) et peut passer par deux chemins différents :
- un chemin 54a constitué par les éléments 42a, 50a, 56a, 58a, 60a et 44a, ou
- un chemin 54b constitué par les éléments 42b, 50b, 56b, 58b, 60b et 44b.

En d'autres termes, la cassette présente deux chemins possibles pour la fibre optique, qui sont symétriques par rapport à un plan perpendiculaire au plan du plateau 53.

Selon un de ces chemins 54a, la fibre optique 20 passe par un élément de guidage 42a de fibre optique puis est insérée dans l'élément de protection 50a par une entrée 56a. La fibre optique ressort de l'élément de protection 50a par une sortie 58a puis passe par un élément de guidage 60a. La fibre optique sort ensuite de la cassette 38 par la sortie 44a puis est insérée dans une cassette d'épissurage non représentée.

Le tube en passage 32 est inséré par l'entrée 28 de la cassette et passe par un ou plusieurs éléments de guidage 62a. Le tube en passage 32 est ensuite dirigé vers la zone de lovage 46 en passant sur l'élément de protection 50a et la surlongueur du tube en passage 32 est enroulée entre des arcs de guidage 64a et 64b. Le tube quitte ensuite la zone de lovage 46 en passant sur l'élément de protection 50b, passe par un élément de guidage 62b puis sort de la cassette 38 par la sortie 30.

Le tube en passage 32 croise la fibre optique 20 au niveau de la zone de croisement 48a mais n'est pas physiquement en contact avec la fibre optique qui passe à l'intérieur de l'élément de protection 50a. Le tube en passage 32 ne peut donc pas endommager la fibre optique 20.

En coupe transversale, l'élément de protection 50a est en forme d'arc de cercle.

L'élément de protection 50a est courbé longitudinalement selon la trajectoire de la fibre optique 20. Ainsi, la fibre optique suit une trajectoire courbée et sans cassure même à l'intérieur de l'élément de protection 50a.

Une seule fibre optique et un seul tube en passage sont représentés sur la figure 4, cependant, la cassette peut recevoir plusieurs fibres optiques et plusieurs tubes en passage. Ainsi, chaque élément de protection 50a et 50b peut recevoir plusieurs fibres optiques 20 et plusieurs tubes en passage 32 peuvent passer sur les éléments de protection 50a et 50b.

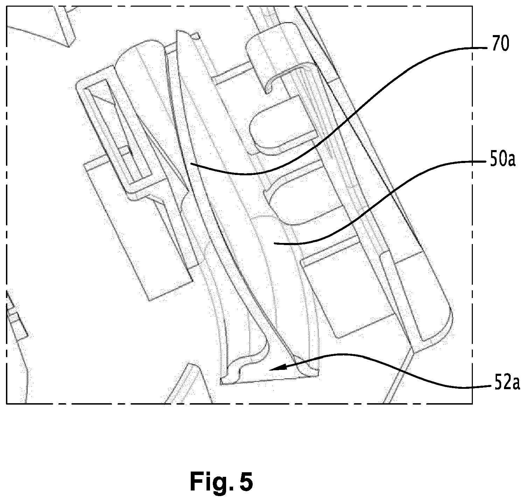

L'élément de protection 50a est représenté en détail sur la figure 5. L'élément de protection 50a est un tunnel courbé selon l'axe de courbure prévu pour la fibre optique 20 qui doit passer dans l'espace interne 52 formé par l'élément de protection. Le tube en passage 32 est au contact avec la face externe de l'élément de protection 50a.

L'élément de protection 50a comprend une fente longitudinale 70 apte à laisser passer au moins une fibre optique 20. Cette fente longitudinale permet de faciliter l'insertion de la fibre optique dans l'espace interne de l'élément de protection.

La fente longitudinale 70 présente une courbure opposée à celle de la trajectoire de la fibre optique 20 afin d'éviter que cette dernière ne sorte spontanément de l'espace interne 52 de l'élément de protection 50a.

L'élément de protection 50a est moulé dans le plateau 52.

L'élément de protection a des dimensions lui permettant de s'intégrer aux dimensions du plateau 52 de la cassette 38 et de pouvoir accueillir plusieurs fibres optiques. L'élément de protection a ainsi une longueur comprise entre 50 mm et 55 mm et une largeur comprise entre 7 mm et 8 mm, de préférence d'environ 7,5 mm.

L'invention concerne également un boîtier 18 comprenant au moins une cassette de base 38 possédant au moins un élément de protection 50a selon l'invention, au moins une fibre optique 20 et au moins un tube en passage 32.

## Revendications

1. Cassette de base (38) d'un boîtier (18) de distribution de fibres optiques, ladite cassette (38) accueillant au moins une fibre optique (20) et au moins un tube en passage (32) comprenant au moins une fibre optique, ladite cassette de base (38) comprenant un plateau (53), au moins un élément de protection mécanique (50a) apte à empêcher le contact direct entre ladite au moins une fibre optique (20) et ledit au moins un tube en passage (32), ledit au moins un élément de protection mécanique étant placé au niveau d'une zone de croisement (48a) entre ladite au moins une fibre optique (20) et ledit au moins un tube en passage (32), **caractérisée en ce que** ledit au moins un élément de protection (50a) est une pièce creuse, son espace interne (52a) est apte à recevoir l'au moins une fibre optique (20), sa paroi externe est destinée à l'appui dudit au moins un tube en passage (32) passant au-dessus de ladite pièce creuse (52a), et son espace interne (52a) est délimité, d'une part, par la paroi interne de l'au moins un élément de protection (50a) et, d'autre part, par le plateau (53) de la cassette de base (38).

2. Cassette de base (38) d'un boîtier de distribution de fibres optiques selon la revendication 1, **caractérisée en ce que** l'au moins un élément de protection (50a) est une pièce allongée dans le sens de la trajectoire de l'au moins une fibre optique.

3. Cassette de base (38) d'un boîtier de distribution de fibres optiques selon la revendication 1 ou 2, **caractérisée en ce que** l'au moins un élément de protection (50a) est en relief par rapport audit plateau (53).

4. Cassette de base (38) d'un boîtier de distribution de fibres optiques selon l'une des revendications 1 à 3, **caractérisée en ce que** l'au moins un élément de protection (50a) est un tunnel.

5. Cassette de base (38) d'un boîtier de distribution de fibres optiques selon l'une des revendications 1 à 4, **caractérisée en ce que**, en coupe transversale, l'au moins un élément de protection (50a) a une section transversale en forme d'arc de cercle.

6. Cassette de base (38) d'un boîtier de distribution de fibres optiques selon l'une des revendications 1 à 5, **caractérisée en ce que** l'au moins un élément de protection (50a) est courbé longitudinalement selon la trajectoire de l'au moins une fibre optique.

7. Cassette de base (38) d'un boîtier de distribution de fibres optiques selon l'une des revendications 1 à 6, **caractérisée en ce que** l'au moins un élément de protection (50a) comprend une fente longitudinale (70) apte à laisser passer l'au moins une fibre optique (20).

8. Cassette de base (38) d'un boîtier de distribution de fibres optiques selon la revendication 7, **caractérisée en ce que** la fente longitudinale (70) est courbée dans le sens opposé à la courbure de la trajectoire de l'au moins une fibre optique.

9. Cassette de base (38) d'un boîtier de distribution de fibres optiques selon l'une des revendications 1 à 8, **caractérisée en ce que** l'au moins un élément de protection (50a) est moulé dans ledit plateau (53).

10. Cassette de base (38) d'un boitier de distribution de fibres optiques selon l'une des revendications 1 à 9, **caractérisée en ce que** l'au moins un élément de protection (50a) a une longueur comprise entre 50 mm et 55 mm.

11. Cassette de base (38) d'un boitier de distribution de fibres optiques selon l'une des revendications 1 à 10, **caractérisée en ce que** l'au moins un élément de protection (50a) a une largeur comprise entre 7 mm et 8 mm.

12. Boîtier (18) comprenant au moins une cassette de base (38) selon l'une des revendications 1 à 11, comprenant l'au moins une fibre optique (20) et l'au moins un tube en passage (32), ledit tube comprenant au moins une fibre optique.

## Patentansprüche

1. Basiskassette (38) eines Verteilerkastens (18) optischer Fasern, wobei die Kassette (38) mindestens eine optische Faser (20) und mindestens ein Durchgangsrohr (32), umfassend mindestens eine optische Faser, aufnimmt, die Basiskassette (38) umfassend eine Platte (53), mindestens ein mechanisches Schutzelement (50a), das geeignet ist, um den direkten Kontakt zwischen der mindestens einen optischen Faser (20) und dem mindestens einen Durchgangsrohr (32) zu verhindern, wobei das mindestens eine mechanische Schutzelement auf Ebene eines Kreuzungsbereichs (48a) zwischen der mindestens einen optischen Faser (20) und dem mindestens einen Durchgangsrohr (32) platziert ist, **dadurch gekennzeichnet, dass** das mindestens eine Schutzelement (50a) ein hohles Teil ist, wobei sein Innenraum (52a) geeignet ist, um die mindestens eine optische Faser (20) aufzunehmen, seine Außenwand zur Auflage des mindestens einen Durchgangsrohrs (32) bestimmt ist, das über das hohle Teil (52a) verläuft, und sein Innenraum (52a) einerseits von der Innenwand des mindestens einen Schutzes (50a) und andererseits von der Platte (53) der Basiskassette (38) begrenzt wird.

2. Basiskassette (38) eines Verteilerkastens optischer Fasern nach Anspruch 1, **dadurch gekennzeichnet, dass** das mindestens eine Schutzelement (50a) ein längliches Teil in Richtung des Verlaufs der mindestens einen optischen Faser ist.

3. Basiskassette (38) eines Verteilerkastens optischer Fasern nach Anspruch 1 oder 2, **dadurch gekennzeichnet, dass** das mindestens eine Schutzelement (50a) in Bezug auf die Platte (53) erhaben ist.

4. Basiskassette (38) eines Verteilerkastens optischer Fasern nach einem der Ansprüche 1 bis 3, **dadurch gekennzeichnet, dass** das mindestens eine Schutzelement (50a) ein Tunnel ist.

5. Basiskassette (38) eines Verteilerkastens optischer Fasern nach einem der Ansprüche 1 bis 4, **dadurch gekennzeichnet, dass** das mindestens eine Schutzelement (50a) im Querschnitt einen Querschnitt in Form eines Kreisbogens aufweist.

6. Basiskassette (38) eines Verteilerkastens optischer Fasern nach einem der Ansprüche 1 bis 5, **dadurch gekennzeichnet, dass** das mindestens eine Schutzelement (50a) in Längsrichtung entlang des Verlaufs der mindestens einen optischen Faser gekrümmt ist.

7. Basiskassette (38) eines Verteilerkastens optischer Fasern nach einem der Ansprüche 1 bis 6, **dadurch gekennzeichnet, dass** das mindestens eine Schutzelement (50a) einen Längsschlitz (70) umfasst, der geeignet ist, die mindestens eine optische Faser (20) durchzulassen.

8. Basiskassette (38) eines Verteilerkastens optischer Fasern nach Anspruch 7, **dadurch gekennzeichnet, dass** der Längsschlitz (70) entgegengesetzt zu der Krümmung des Verlaufs der mindestens einen optischen Faser gekrümmt ist.

9. Basiskassette (38) eines Verteilerkastens optischer Fasern nach einem der Ansprüche 1 bis 8, **dadurch gekennzeichnet, dass** das mindestens eine Schutzelement (50a) in die genannte Platte (53) geformt ist.

10. Basiskassette (38) eines Verteilerkastens optischer Fasern nach einem der Ansprüche 1 bis 9, **dadurch gekennzeichnet, dass** das mindestens eine Schutzelement (50a) eine Länge zwischen 50 mm und 55 mm aufweist.

11. Basiskassette (38) eines Verteilerkastens optischer Fasern nach einem der Ansprüche 1 bis 10, **dadurch gekennzeichnet, dass** das mindestens eine Schutzelement (50a) eine Breite zwischen 7 mm und 8 mm aufweist.

12. Kasten (18), umfassend mindestens eine Basiskassette (38) nach einem der Ansprüche 1 bis 11, umfassend die mindestens eine optische Faser (20) und das mindestens eine Durchgangsrohr (32), das Rohr umfassend mindestens eine optische Faser.

## Claims

1. A base cassette (38) of an optical fiber distribution housing (18), said cassette (38) accommodating at least one optical fiber (20) and at least one passage tube (32) comprising at least one optical fiber, said base cassette (38) comprising a plate (53), at least one mechanical protection element (50a) adapted to prevent direct contact between said at least one optical fiber (20) and said at least one passage tube (32), said at least one mechanical protection element being placed at a crossing zone (48a) between said at least one optical fiber (20) and said at least one passage tube (32), **characterized in that** said at least one protection element (50a) is a hollow part, its internal space (52a) is able to receive the at least one optical fiber (20), its outer wall is intended to support said at least one passage tube (32) passing above said hollow part (52a), and its internal space (52a) is delimited, on the one hand, by the inner wall of the at least one protection element (50a) and, on the other hand, by the plate (53) of the base cassette (38).

2. The base cassette (38) of an optical fiber distribution housing according to claim 1, **characterized in that** the at least one protection element (50a) is an elongate part in the direction of the trajectory of the at least one optical fiber.

3. The base cassette (38) of an optical fiber distribution housing according to claim 1 or 2, **characterized in that** the at least one protection element (50a) is raised relative to said plate (53).

4. The base cassette (38) of an optical fiber distribution housing according to one of claims 1 to 3, **characterized in that** the at least one protection element (50a) is a tunnel.

5. The base cassette (38) of an optical fiber distribution housing according to one of claims 1 to 4, **characterized in that**, in cross-section, the at least one protection element (50a) has a cross-section in the form of a circular arc.

6. The base cassette (38) of an optical fiber distribution housing according to one of claims 1 to 5, **characterized in that** the at least one protection element (50a) is longitudinally curved along the trajectory of the at least one optical fiber.

7. The base cassette (38) of an optical fiber distribution housing according to one of claims 1 to 6, **characterized in that** the at least one protection element (50a) comprises a longitudinal slot (70) able to allow the at least one optical fiber (20) to pass.

8. The base cassette (38) of an optical fiber distribution housing according to claim 7, **characterized in that** the longitudinal slot (70) is curved in the direction opposite the curvature of the trajectory of the at least one optical fiber.

9. The base cassette (38) of an optical fiber distribution housing according to one of claims 1 to 8, **characterized in that** the at least one protection element (50a) is molded in said plate (53).

10. The base cassette (38) of an optical fiber distribution housing according to one of claims 1 to 9, **characterized in that** the at least one protection element (50a) has a length of between 50 mm and 55 mm.

11. The base cassette (38) of an optical fiber distribution housing according to one of claims 1 to 10, **characterized in that** the at least one protection element (50a) has a width of between 7 mm and 8 mm.

12. A housing (18) comprising at least one base cassette (38) according to one of claims 1 to 11, comprising the at least one optical fiber (20) and the at least one passage tube (32), said tube comprising at least one optical fiber.
